# EUROPÄISCHE PATENTSCHRIFT

(11) **EP 1 626 034 B1**
(45) Veröffentlichungstag und Bekanntmachung des Hinweises auf die Patenterteilung: **23.07.2008**
(21) Anmeldenummer: 05016980.4
(22) Anmeldetag: 04.08.2005
(51) Int. Cl.: C02F 1/00, F24D 17/00

(54) **Verfahren und System zur Behandlung von Wasser**
Process and system for water treatment
Procédé et système pour le traitement d'eau

(30) Priorität: 12.08.2004 DE 102004039232
(43) Veröffentlichungstag der Anmeldung: 15.02.2006
(73) Patentinhaber: Bauer, Thomas, 85716 Unterschleissheim (DE); Bauer, Gerhard, 85716 Unterschleissheim (DE)
(72) Erfinder: Bauer, Thomas, 85716 Unterschleissheim (DE); Bauer, Gerhard, 85716 Unterschleissheim (DE)
(74) Vertreter: Manitz, Finsterwald & Partner GbR

(56) Entgegenhaltungen:
- DE-A1- 19 653 696
- DE-A1- 19 932 436
- US-A- 4 115 263
- KIM B R ET AL: "Literature review-efficacy of various disinfectants against Legionella in water systems" WATER RESEARCH, PERGAMON PRESS, OXFORD, GB, Bd. 36, Nr. 18, November 2002 (2002-11), Seiten 4433-4444, XP004380727 ISSN: 0043-1354
- LIU Z ET AL: "Efficacy of ultraviolet light in preventing Legionella colonization of a hospital water distribution system" WATER RESEARCH, PERGAMON PRESS, OXFORD, GB, Bd. 29, Nr. 10, Oktober 1995 (1995-10), Seiten 2275-2280, XP004035167 ISSN: 0043-1354

## Beschreibung

Die vorliegende Erfindung betrifft ein Verfahren gemäß Anspruch 1 sowie eine Vorrichtung gemäß Anspruch 22 zur Behandlung von Trinkwasser.

Es ist bekannt, dass Trinkwassernetze mit Erregern der so genannten Legionellenkrankheit derart verunreinigt werden können, dass eine Gesundheitsgefährdung der Verbraucher entsteht. Dieses Problem besteht nicht nur bei Schwimmbädern sondern auch bei reinen Trinkwassernetzen wie im Wohnungsbau, bei öffentlichen Gebäuden, gewerblichen Gebäuden und dergleichen. Die Hauptgefahr besteht dabei in Warmwassernetzen, da sich die Legionellenerreger insbesondere im Temperaturbereich von ca. 25 bis 55°C stark vermehren.

Zur Bekämpfung von Legionellenerregern ist es bekannt, möglicherweise befallene Trinkwassernetze thermisch zu behandeln (vgl. DE 199 32 436). Das heißt, die Netze werden mit hoch erhitztem Wasser, beispielsweise von 70°C bis 80°C, über längere Zeit beaufschlagt. Eine derartige Behandlung kann Stunden bis Tage dauern, je nachdem wie stark der Legionellenbefall ist. Die dadurch entstehenden Kosten sind entsprechend hoch. Außerdem kann die Behandlung zur Verkalkung und Korrosion der Leitungsnetze führen, und die Nutzung des Warmwassers ist in dieser Zeit mit Verbrühungsgefahr verbunden.

Im übrigen verursacht auch der normale Betrieb des Trinkwassersystems relativ hohe Betriebskosten sowie die Gefahr von Verkalkung und Korrosion, da zur Vermeidung eines Legionellenwachstums eine Warmwassertemperatur von 60°C vorgesehen ist. Dennoch verbleibt auch bei dieser erhöhten Temperatur ein Restrisiko an Legionellenbefall.

Des weiteren sind chemische und elektrolytische Behandlungsverfahren bekannt. Die Leitungsnetze werden dabei je nach Befall mit einer größeren oder kleineren Menge von Desinfektionsmittel beaufschlagt. Es ist auch bekannt, zur Vorbeugung von Legionellenbefall kontinuierlich Desinfektionsmittel in Leitungsnetze einzubringen (z.B. DE 196 53 696). Die Beaufschlagungsmenge wird dabei verbrauchsabhängig geregelt.

Der Erfindung liegt die Aufgabe zugrunde, ein Verfahren und ein System der eingangs genannten Art anzugeben, welches zum einen eine gute Desinfektionswirkung aufweist und zum anderen, insbesondere gesamtwirtschaftlich betrachtet, relativ kostengünstig ist. Darüber hinaus soll die mit der Behandlung einhergehende Beeinträchtigung des Leitungssystems und des Trinkwassers möglichst gering gehalten werden.

Diese Aufgabe wird dadurch gelöst, die Mittel in umgekehrter Abhängigkeit vom Wasserverbrauch angewendet werden, indem bei hohem Wasserverbrauch wenig oder kein Mittel, bei niedrigem oder keinem Wasserverbrauch dagegen relativ viel Mittel oder überhaupt nur Mittel angewendet wird.

Erfindungsgemäß wird also nicht wie bisher verbrauchsabhängig behandelt, indem bei hohem Wasserverbrauch viel Mittel eingebracht wird und bei wenig Wasserverbrauch wenig. Die Erfindung geht vielmehr den umgekehrten Weg, indem bei hohem Wasserverbrauch gerade wenig Behandlungsmittel eingebracht wird und bei niedrigem oder keinem Verbrauch viel Behandlungsmittel. Dies beruht auf der Erwägung, dass bei hohem Wasserverbrauch viel Frischwasser aus dem Leitungsnetz des Wasserversorgungsunternehmens nachgeliefert wird, welches üblicherweise wenig Verunreinigungen, insbesondere wenig oder keinen Legionellenbefall aufweist. Bei ausreichend guter Dimensionierung des Trinkwassersystems im Gebäude kommt es zu den Hauptzapfzeiten mit den hohen Wassermengen zu einer guten Durchspülung des Netzes. Ein möglicherweise gesundheitsgefährdendes Legionellenwachstum tritt insbesondere bei längeren Standzeiten, also geringem Wasserverbrauch, bei Erwärmung des Kaltwassernetzes, bei Abkühlung des Warmwassernetzes und in nicht durchflossenen Leitungsabschnitten auf.

Durch die erfindungsgemäße Lösung wird damit nicht nur die Wirksamkeit erhöht sondern auch ein unnötiger Verbrauch von Behandlungsmittel vermieden. Damit kann auch die Belastung des Trinkwassers und des Leitungsnetzes gering gehalten werden. Die Verbraucher erhalten ein möglichst gering behandeltes Lebensmittel zur Verfügung.

Weiterhin kann die Anwendung von Behandlungsmittel in Abhängigkeit von einem im Wasser gemessenen Konzentrationswert erfolgen, was den Vorteil einer bedarfsgenauen Anwendung des Behandlungsmittels hat.

Die Abnahme der Konzentration ist ein Maß dafür, wie stark das System mit schädlichen Verunreinigungen belastet ist. Dazu wird das System auf eine Sollkonzentration gebracht und die Zugabe an Behandlungsmittel für eine gewisse Zeit unterbrochen. Bei hoher Abnahme der Behandlungsmittelkonzentration ist das System stärker belastet, während bei geringer oder keiner Abnahme der Behandlungsmittelkonzentration der Hygienezustand des Systems noch gut ist. Je mehr Verunreinigungen im System vorhanden sind, desto größer ist nämlich die Zehrung an Behandlungsmittel. Folglich kann über die Abnahme der Konzentration eine Aussage über den hygienischen Zustand des Systems getroffen werden.

Nach einer bevorzugten Ausgestaltung der Erfindung zirkuliert das Frischwasser vor dem oder den Verbrauchsstellen und wird im Bereich des Warmwassers oder der Zirkulation behandelt. Die einzubringende Menge an Behandlungsmittel kann dadurch besonders gering gehalten werden, insbesondere da erfindungsgemäß nur bei geringem oder keinem Verbrauch behandelt wird.

Bei Warmwasserbehandlung wird insbesondere auf eine zusätzliche Erwärmung verzichtet. Damit kann der Energieverbrauch gering gehalten, die Gefahr von Verbrühungen vermieden und die Kalkbildung deutlich vermindert werden.

Neben Warmwasser kann auch Kaltwasser behandelt werden, da sich dieses insbesondere bei längeren verbrauchslosen oder verbrauchsarmen Zeiten und insbesondere in den warmen Monaten auf Temperaturen erwärmen kann, bei denen bereits eine gefährliche Vermehrung von Legionellen auftreten kann.

Grundsätzlich kann es auch genügen, lediglich eine Kaltwasserzirkulation vor den Verbrauchsstellen vorzusehen. Dadurch kann eine lokale Erwärmung und die dadurch bestehende Gefahr einer Legionellenvermehrung vermieden oder zumindest verringert werden. Die Kaltwasserzirkulation wird daher auch als solche beansprucht.

Die Behandlung kann mit chemischen und/oder mit elektrolytischen und/oder physikalischen Mitteln erfolgen. Bei Kaltwasserbehandlung kann alternativ oder zusätzlich hierzu auch eine Kühlung durchgeführt werden. Eine Kühlung hat neben einer Verringerung des Legionellenwachstums den zusätzlichen Vorteil, dass das entnommene Kaltwasser von Anfang an eine niedrige Temperatur aufweist.

Das erfindungsgemäße Verfahren kann vorbeugend oder bei Befall angewandt werden. Besondere Vorteile ergeben sich bei vorbeugender Behandlung, da trotz permanenter Anwendung aufgrund des erfindungsgemäßen Systems nur ein geringer Verbrauch an Behandlungsmittel und damit eine geringe Beeinträchtigung und geringe Kosten verbunden sind. Zusätzlich kann die Temperatur des Warmwassersystems auf Bedarfstemperaturen < 60°C herabgesetzt werden, da die vorbeugende Behandlung kein hohes Temperaturniveau erfordert. Dadurch können die Wärmeverluste des Warmwassersystems reduziert werden.

Bevorzugt ist es außerdem, wenn die Behandlung zumindest zeitweise so durchgeführt wird, dass eine minimale Konzentration an Behandlungsmittel im behandelten Bereich nicht unterschritten wird. Damit kann eine sichere Desinfektion gewährleistet werden, was beispielsweise bei erhöhtem Gefahrenpotential wie in Krankenhäusern und Altenheimen oder einem aus sonstigen Gründen geforderten erhöhten Hygienegrad vorteilhaft ist.

Ebenfalls bevorzugt wird die Behandlung so durchgeführt, dass eine maximale Konzentration an Behandlungsmittel und/oder dessen Neben- und/oder Reaktionsprodukten im Wasser nicht überschritten wird. Dadurch können eine übermäßige Beeinträchtigung vermieden und die Kosten gering gehalten werden.

Die Behandlung kann erfindungsgemäß in Abhängigkeit von einer aktuell gemessenen Verbrauchsmenge durchgeführt werden. Eine andere Möglichkeit besteht darin, die Behandlung in Abhängigkeit von auf Erfahrungswerten beruhenden Verbrauchsmengen durchzuführen. Hierfür kann insbesondere eine zeitabhängige Behandlung vorgesehen sein. So kann beispielsweise bei Wohnanlagen eine Behandlung insbesondere in den Nachtstunden, in denen üblicherweise ein geringer oder kein Wasserverbrauch gegeben ist, durchgeführt werden, während beispielsweise in den Morgen- und Abendstunden auf eine Behandlung verzichtet wird.
Die Behandlung kann ebenso in Abhängigkeit von gemessenen und / oder errechneten Konzentrationen des zugesetzten Mittels und dessen Neben- und Reaktionsprodukten im behandelten Bereich erfolgen. Die Behandlung kann vorzugsweise in den Nachtstunden erfolgen. Dabei wird eine gemessene und / oder durch die Regelungstechnik errechnete Konzentration an Behandlungsmittel und / oder dessen Neben- und Reaktionsprodukten durch Zugabe des Behandlungsmittels an einen durch die Regelungstechnik vorgegebenen Sollwert angepasst. Bei der ersten Zapfung wird die Zugabe von Mittel beispielsweise bis zu den Nachtstunden unterbrochen.

Bei Behandlung von Kaltwasser kann das Einbringen von Behandlungsmittel außerdem temperaturabhängig erfolgen. Da bei Unterschreiten einer bestimmten Temperatur kein gefährliches Legionellenwachstum zu erwarten ist, kann auch dadurch eine wirkungsvolle Behandlung gewährleistet werden.

Bei Kühlung von Kaltwasser kann die Abwärme bevorzugt für die Erwärmung von Warmwasser verwendet werden. Die durch die Kühlung entstehenden Zusatzkosten können dadurch gering gehalten werden.

Die Einbringung von Behandlungsmittel kann außerdem während den Behandlungsphasen kontinuierlich oder getaktet oder stoßweise erfolgen. Eine stoßweise Behandlung ist beispielsweise dann vorteilhaft, wenn normalerweise nicht durchflossene Leitungsabschnitte gespült werden.

Es kann auch eine Fernüberwachung der Behandlung durchgeführt werden. Dadurch kann die Wirkung optimiert und auf Störungen reagiert werden. Auch kann die Einhaltung von Grenzwerten für die Menge an Desinfektionsmittel überwacht und sichergestellt werden. Zudem kann über die Regelungstechnik eine kontinierliche Aufzeichnung von Kaltwasser- und optional zusätzlich von Warmwasserverbrauch, von Behandlungsmittelverbrauch und Behandlungsmittelkonzentration im behandelten Wasser erfolgen. Die aufgezeichneten Daten können über die Fernüberwachung eingesehen und ausgelesen werden.

Bei konzentrationsabhängiger Behandlung wird Behandlungsmittel insbesondere bei Erreichen eines unteren Grenzwerts der Konzentration in das System gegeben, während die Zugabe bei Erreichen eines oberen Grenzwertes beendet wird. Es wird also bevorzugt eine bestimmte Sollkonzentration im System eingestellt und anschließend überwacht, wie die Konzentration durch Zehrung des Behandlungsmittels abnimmt. Bei Erreichen des unteren Grenzwertes wird dann wieder Behandlungsmittel zugegeben, so dass eine ausreichende Behandlung sichergestellt ist. Bevorzugt erfolgt die Zugabe von Behandlungsmittel in Schwachlastzeiten.

Die Messung der Konzentration erfolgt bevorzugt im eigentlichen Leitungsnetz einschließlich der Zirkulation. Der obere und der untere Grenzwert können im übrigen tags und nachts unterschiedlich gewählt werden, insbesondere kann der obere Grenzwert tagsüber niedriger gewählt werden, um dann eine möglichst geringe Belastung des Trinkwassers zu haben.

Die Erfindung betrifft außerdem eine Vorrichtung zur Behandlung von Trinkwasser, zur Bekämpfung von schädlichen Verunreinigungen, insbesondere Legionellen, mit Mitteln zur Durchführung der zuvor beschriebenen Verfahrensschritte.

Nicht beschränkende Ausführungsbeispiele der Erfindung sind in den Zeichnungen dargestellt und werden nachfolgend beschrieben. Es zeigen in schematischer Darstellung:
- Fig. 1: ein Prinzipschema eines erfindungsgemäßen Behandlungssystems für die Behandlung mit chemischen Mitteln und

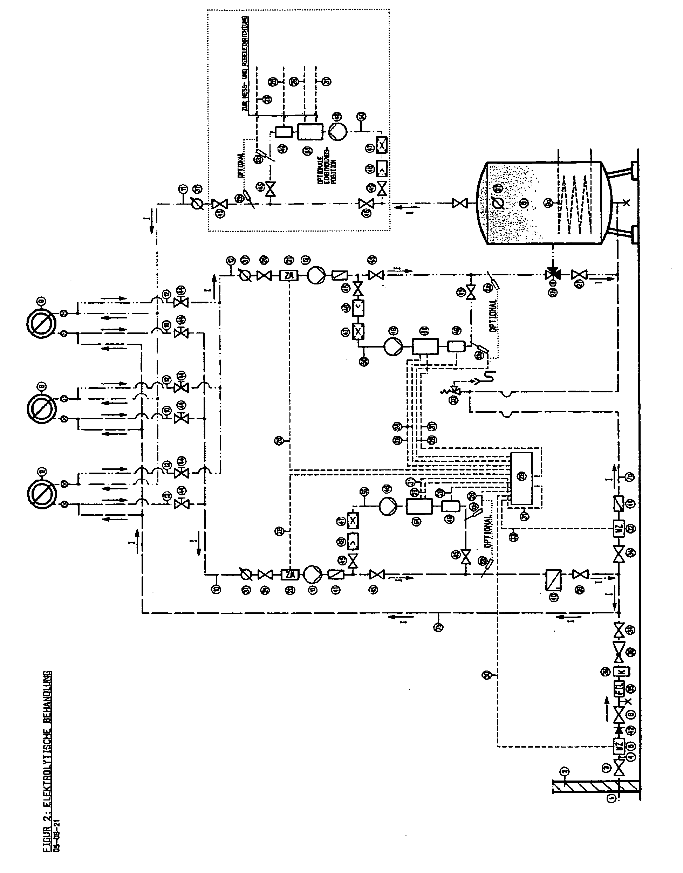

- Fig. 2: ein Prinzipschema eines erfindungsmäßigen Behandlungssystems für die Behandlung mit elektrolytischen Mitteln.

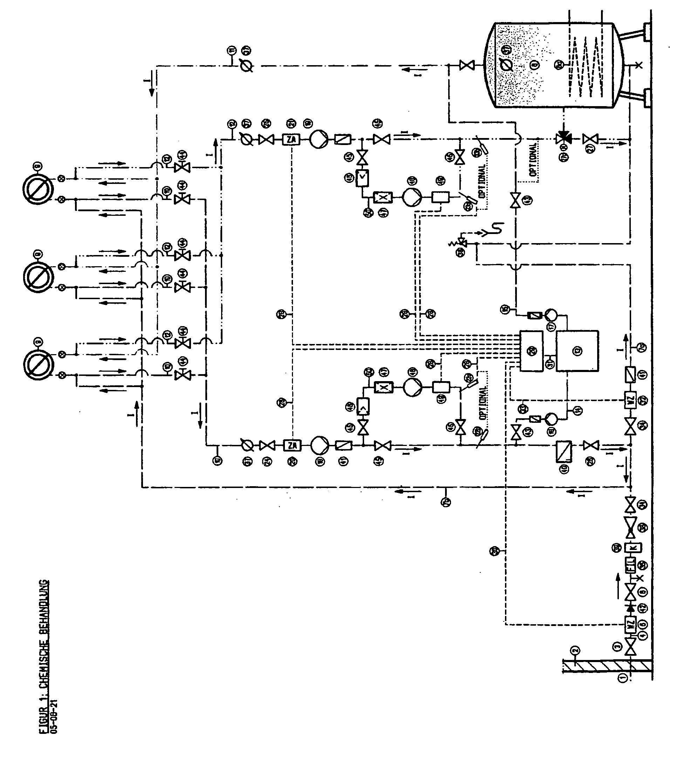

Fig. 1 zeigt ein Trinkwasserleitungssystem im Wohnbereich, wobei die Wasserfließrichtung mit Pfeilen I gekennzeichnet ist. Eine Wasserzuleitung 1 führt in ein Gebäude 2 und dort zu einem Hauptabsperrventil 3. Eine Hausleitung 4 führt über einen Wasserzähler 5 zu einem weiteren Absperrventil 6. Vom Absperrventil 6 führt eine Kaltwasserleitung 7a zu einem Warmwasserbereiter 8. Eine weitere Kaltwasserleitung 7b führt zu Entnahmestellen 9.

Vor den Entnahmestellen 9 zweigen von der Kaltwasserleitung 7b Rückführleitungen 10 ab, die andererseits vor dem Warmwasserbereiter 8 an die Kaltwasserleitung 7a angeschlossen ist und zusammen mit dieser sowie der Kaltwasserleitung 7b eine Kaltwasserzirkulation bildet. Vom Warmwasserbereiter 8 führt eine Warmwasserleitung 11 Entnahmestellen 9. Vor der Entnahmestellen 9 zweigen auch hier Rückführleitungen 12 ab, die andererseits an den Warmwasserbereiter 8 angeschlossen ist und zusammen mit diesem und der Warmwasserleitung 11 eine Warmwasserzirkulation bildet. Zur Einstellung und Einhaltung der bestimmungsmäßigen Zirkulationsvolumenströme in der Kaltwasser- und Warmwasserzirkulation sind Regulierventile 44 in den Rückführleitungen 10 und 12 vorgesehen.

Der Anschluss der Warmwasserrückführleitung 12 an den Warmwasserbereiter 8 erfolgt einerseits über ein Umschaltventil 27a im Bereich oberhalb der Heizspirale 8a und andererseits über das Ventil 27 und die Kaltwasserzuführleitung 7a. Aus Energieeinspargründen ist das Umschaltventil 27 a beispielsweise in Zeiten, in denen keine Zugabe von Behandlungsmittel erfolgt, so geschaltet, dass das Wasser aus der Warmwasserrückführleitung 12 nicht in die Kaltwasserzuführleitung 7 a mündet, sondern in den mittleren Teil des Warmwasserbereiters 8 eingeleitet wird.

Das System umfasst des weiteren eine Dosiereinrichtung 13 für Behandlungsmittel. Die Dosiereinrichtung 13 ist einerseits über eine Leitung 14 an die Kaltwasserrückführleitung 10 und andererseits über eine Leitung 15 an die Warmwasserleitung 11 oder optional an die Warmwasserrückführleitung 12 angeschlossen. Sowohl in der Leitung 14 als auch in der Leitung 15 ist jeweils eine Dosierpumpe 16, 17 angeordnet. Selbstverständlich könnte auch eine gemeinsame Pumpe vorgesehen sein. In der Kaltwasserrückführleitung 10 und in der Warmwasserrückführleitung 12 ist ebenfalls jeweils eine Pumpe 18, 19 zur Umwälzung des Kaltwassers bzw. des Warmwassers angeordnet.

Des weiteren weisen die Kaltwasserrückführleitung 10 und die Warmwasserrückführleitung 12 jeweils einen Wasserzähler 20, 21 mit Messimpulsgeber auf. In der Kaltwasser- und Warmwasserückführleitung zweigt, je nach Messeinrichtung, eine Bypassleitung 50 ab und mündet wieder in 10 und 12. In der Bypassleitung 50 befindet sich eine Messeinrichtung 22 a, 23 a zur Messung der Konzentration des Behandlungsmittels, eine Umwälzpumpe 48, ein Feinfilter 46 und Absperrventile 45. Zur Einstellung des Volumenmessstroms in der Bypassleitung 50 befindet sich ein Regelventil 47. Zur Überwachung der Strömung im Bypass 50 ist ein Strömungswächter 49 vorgesehen. Alternativ und je nach Messeinrichtung kann die Messung der Konzentration des Behandlungsmittels 22 b, 23 b ohne Bypass direkt in der Kaltwasserrückführleitung 10 bzw. Warmwasserrückführleitung 12 erfolgen. Vor dem Wasserzähler 20, 21 und nach der Messeinrichtung 22, 23 ist in der Kaltwasserrückführleitung 10 und in der Warmwasserrückführleitung 12 jeweils ein weiteres Absperrventil 24, 25 und 26, 27 vorgesehen. Die Wasserzähler 20, 21, die Messeinrichtungen 22, 23 und der Strömungswächter 49 sind jeweils über Leitungen 28 mit einer Mess- und Regeleinrichtung 29 verbunden.

Über eine Leitung 30 zwischen Wasserzähler 5, der ebenfalls einen Messimpulsgeber aufweist, und Mess- und Regeleinrichtung 29 wird die vom Wasserzähler 5 festgestellte Gesamtverbrauchsmenge ebenfalls an die Mess- und Regeleinrichtung 29 gegeben. Über eine Steuerleitung 31 steht die Mess- und Regeleinrichtung 29 außerdem mit der Dosiereinrichtung 13 in Verbindung, um die Pumpen 16, 17 sowie die Dosiermengen zu steuern, zu regeln, zu protokollieren und zu überwachen.

Beim Einsatz des erfindungsgemäßen Systems im Kaltwasserbereich wird über den Wasserzähler 20 die zirkulierende Wassermenge und über die Messeinrichtung 22 die Konzentration an Behandlungsmittel erfasst und über die Leitungen 28 an die Mess- und Steuereinrichtung 29 gegeben. Zusätzlich wird die über den Wasserzähler 5 festgestellte Kaltwasserzuflussmenge über die Leitung 30 in die Mess- und Regeleinrichtung 29 gegeben. Diese veranlasst dann über die Steuerleitung 31 die Dosiereinrichtung 13 Behandlungsmittel über die Leitung 14 in die Kaltwasserrückführleitung 10 einzubringen, falls dies gemäß der Regelcharakteristik vorgesehen ist. Und zwar veranlasst die Mess- und Regeleinrichtung 29 eine Eingabe von Behandlungsmittel dann, wenn über den Zähler 5 festgestellt wurde, dass ein geringer oder kein Wasserverbrauch gegeben ist, während bei festgestelltem hohem Wasserverbrauch keine oder nur geringe Einbringung von Behandlungsmittel ausgelöst wird. Dabei kann zusätzlich noch ein separater Kaltwasserverbrauchszähler oder Warmwasserverbrauchszähler 32 mit Messimpulsgeber vorgesehen sein, um festzustellen, ob nur Warmwasser oder nur Kaltwasser verbraucht wird. Im dargestellten Ausführungsbeispiel ist ein Warmwasserverbrauchszähler 32 vorgesehen, der über eine Leitung 33 mit der Mess- und Regeleinrichtung 29 verbunden ist.

Die eingebrachte Menge an Behandlungsmittel wird ebenfalls über die Mess- und Regeleinrichtung 29 in Abhängigkeit von der Wassermenge und / oder der festgestellten Behandlungsmittelkonzentration in der Kaltwasserzirkulation 7a, 7b, 10 über die Messung in der Bypassleitung 50 und / oder in Abhängigkeit von der pro Zeiteinheit zugesetzten Behandlungsmittelmenge vorgegeben. Dabei wird die Regelung insbesondere so vorgenommen, dass die Behandlungsmittelkonzentration in vorgegebenen Zeitfenstern stets oberhalb eines vorgegebenen Minimalwertes und unterhalb eines vorgegebenen Maximalwertes bleibt. Durch die Regeleinrichtung 31 wird ein Maximalwert an zudosierter Behandlungsmittelmenge pro Zeiteinheit vorgegeben, so dass ebenso eine unzulässige Konzentration an Neben- bzw. Reaktionsprodukten des Behandlungsmittels ausgeschlossen wird. Somit erfolgt mit geringen Zusatzmitteln eine kontinuierliche Desinfektion im Leitungsnetz und in der zentralen Warmwasserbereitung.

Die Behandlung des Warmwassers erfolgt entsprechend. Die Mess- und Regeleinrichtung 29 überwacht über den Wasserzähler 21 die Wassermenge und über die Messeinrichtung 23 die Konzentration an Behandlungsmittel in der Warmwasserzirkulation 8, 11, 12 über die Messung in der Bypassleitung. Wird über den Wasserzähler 5 und gegebenenfalls einen zusätzlichen Warmwasser- oder Kaltwasserzähler 32 ein hoher Warmwasserverbrauch festgestellt, erfolgt keine oder nur eine geringe Einbringung von Behandlungsmittel. Wird dagegen kein oder nur ein geringer Warmwasserverbrauch festgestellt, so veranlasst die Mess- und Regeleinrichtung 29 die Dosiereinrichtung 13 zur Einbringung von Behandlungsmittel in die Warmwasserleitung 11, und zwar in Abhängigkeit von der gemessenen Wassermenge in der Zirkulation 8, 11, 12 und / oder der Konzentration an Behandlungsmittel und / oder in Abhängigkeit von der pro Zeiteinheit zugesetzten Behandlungsmittelmenge. Dabei stellt die Mess- und Regeleinrichtung 29 sicher, dass die Konzentration an Behandlungsmittel in vorgegebenen Zeitfenstern stets unterhalb eines vorgegebenen Maximalwertes bleibt.

Die Mess- und Regeleinrichtung 29 kann außerdem so ausgelegt sein, dass sie ein Erreichen einer bestimmten Behandlungsmittelkonzentration in einer vorgegebenen Zeit erreicht, und zwar sowohl bei der Kaltwasserals auch bei der Warmwasserbehandlung. Über eine Fernaufschaltung kann die ordnungsgemäße Funktion der Anlage überwacht werden.

Der Unterschied zur Behandlung mit chemischen Mitteln ist bei der Behandlung mit elektrolytischen Mitteln folgender:

Das Behandlungsmittel wird mittels elektrolytischer Prozesse aus dem Wasser selbst erzeugt.

Das System umfasst eine Elektrolyseeinrichtung 51 zur Erzeugung von Behandlungsmittel. Das Behandlungsmittel wird über die Bypassleistung 50 in die Warmwasserrückführleitung 12 gegeben. Optional kann die Elektrolyseeinrichtung mit ihren Komponenten auch in die Warmwasserleitung 11, nach dem Warmwasserbereiter 8 installiert werden.
Über eine Steuerleitung 31 steht die Mess- und Regeleinrichtung 29 mit der Elektrolyseanlage 51 in Verbindung, um die Behandlungsmittelmenge und Behandlungsmittelkonzentration in Abhängigkeit von den Messwerten aus der Messeinrichtung 49 zu steuern, zu regeln, zu protokollieren und zu überwachen.

Der Einsatz des erfindungsgemäßen Systems im Kaltwasserbereich erfolgt analog. Dabei wird die Elektrolyseanlage in die Kaltwasserrückführleitung 10 installiert.

Das erfindungsgemäße System ermöglicht sowohl eine wirkungsvolle Behandlung von Warmwasser als auch von Kaltwasser, insbesondere zur Bekämpfung von Legionellen, wobei nur eine verhältnismäßig geringe Menge an Behandlungsmittel eingebracht werden muss. Dadurch kann die Beeinträchtigung des Wassers als auch des Leitungsnetzes gering gehalten werden, und es genügen verhältnismäßig kleine Behandlungsgeräte, insbesondere Dosiereinrichtungen 13, da die Menge an Behandlungsmittel im wesentlichen nur von der Wasserzirkulationsmenge, der Behandlungsmittelkonzentration, der pro Zeiteinheit zudosierten Behandlungsmenge und nur in sehr geringem Maße vom Verbrauch abhängt.

Dargestellt sind in der Zeichnung außerdem weitere Absperrventile 34, ein Filter 35, ein Druckminderer 36, Thermometer 37, Sicherheitsventil 38, Rückschlagventile 41, ein Rückflussverhinderer bzw. Rohrtrenner 42, dessen Ausführung und Lage im Netz sich nach Art des Behandlungsmittels richtet, sowie Absperrventile 43 in den Dosierleitungen 14, 15, die jeweils in an sich bekannter Weise funktionieren. Darüber hinaus ist eine Kalkschutzeinrichtung 39 vorgesehen, durch welche Kalkablagerungen und -inkrustationen im System verringert oder vermieden werden können. Da derartige Ablagerungen und Inkrustationen das Legionellenwachstum fördern und die Behandlung des Wassers erschweren, kann dadurch die Effektivität des erfindungsgemäßen Verfahrens und Systems weiter erhöht werden. Als Kalkschutzeinrichtung 39 können bekannte Systeme verwendet werden, insbesondere physikalische Systeme.

Schließlich ist in der Figur eine Kühleinrichtung 40 dargestellt, über welche das Kaltwasser in der Kaltwasserzirkulation 7a, 7b, 10 gekühlt werden kann. Eine solche Kühleinrichtung 40 kann zusätzlich oder alternativ zur Wasserbehandlung eingesetzt werden, um das Legionellenwachstum oder die Vermehrung anderer Verunreinigungen zu unterdrücken. Über einen in die Kühleinrichtung 40 integrierten Thermostat kann die Temperatur in der Kaltwasserzirkulation 7a, 7b, 10 beispielsweise auf eine Temperatur zwischen 10°C bis 15°C reduziert werden. Über eine nicht dargestellte Wärmetauscheinrichtung kann die bei der Kühlung entstehende Wärme zur Vorerwärmung des Wassers verwendet werden.

Das erfindungsgemäße System kann sowohl für Neubauten, bei denen sowohl eine Warmwasser- als auch eine Kaltwasser-Zirkulation vorgesehen werden kann, als auch für Altbauten eingesetzt werden, bei denen keine Wasserzirkulation vorhanden ist. Außerdem kann das erfindungsgemäße System sowohl vorbeugend bei unbelasteten Netzen als auch zur Dekontaminierung belasteter Netze eingesetzt werden. In beiden Fällen kann die Warmwassertemperatur im Netz auf ca. 45°C bis 55°C abgesenkt werden, da durch das erfindungsgemäße System bereits allein eine ausreichende Unterdrückung des Legionellenwachstums oder der Vermehrung anderer Verunreinigungen möglich ist. Vorteilhaft kann bei Einsatz des erfindungsgemäßen Verfahrens bzw. Systems auch eine Brennwert- bzw. Solarwärmenutzung vorgesehen werden, bei welcher die Warmwasserrückführleitung 12, wie dargestellt, in einem mittleren Bereich in den Warmwasserbereiter 8 und nicht unten mündet, da bei dem erfindungsgemäßen System keine hohe Temperatur im gesamten Warmwasserbereiter erforderlich ist. Im unteren Bereich des Warmwasserbereiters 8 kann dadurch die Temperatur bis auf beispielsweise 12°C bis 25°C abgesenkt werden, so dass bereits bei relativ niedrigen Temperaturen des Solarsystems eine Wärmeausnutzung erfolgen kann.

Durch Umschalten des Ventils 27a kann das rückgeführte Warmwasser zeitweise über das Ventil 27 und die Kaltwasserzuführleitung 7a von unten in den Warmwasserbehälter 8 geführt werden. Auf diese Weise gelangt behandeltes Warmwasser mit Behandlungsmittel auch in den unteren Bereich des Warmwasserbehälters 8, so dass auch dieser bei Bedarf dekontaminiert werden kann.

### Bezugszeichenliste

- 1: Wasserzuleitung
- 2: Gebäude
- 3: Hauptabsperrventil
- 4: Hausleitung
- 5: Wasserzähler
- 6: Absperrventil
- 7a: Kaltwasserleitung
- 7b: Kaltwasserleitung
- 8: Warmwasserbereiter
- 8a: Heizspirale
- 9: Entnahmestelle
- 10: Kaltwasserrückführleitung
- 11: Warmwasserleitung
- 12: Warmwasserrückführleitung
- 13: Dosiereinrichtung
- 14: Dosierleitung
- 15: Dosierleitung
- 16: Dosierpumpe
- 17: Dosierpumpe
- 18: Kaltwasserumwälzpumpe
- 19: Warmwasserumwälzpumpe
- 20: Kaltwasserzähler
- 21: Warmwasserzähler
- 22a, 22b: Kaltwassermesseinrichtung
- 23a, 23b: Warmwassermesseinrichtung
- 24: Absperrventil
- 25: Absperrventil
- 26: Absperrventil
- 27: Absperrventil
- 27a: Umschaltventil
- 28: Messleitung
- 29: Mess- und Regeleinrichtung
- 30: Messleitung
- 31: Steuerleitung
- 32: Warmwasserzähler
- 33: Messleitung
- 34: Absperrventil
- 35: Filter
- 36: Druckminderer
- 37: Thermometer
- 38: Sicherheitsventil
- 39: Kalkschutzeinrichtung
- 40: Kühleinrichtung
- 41: Rückschlagventil
- 42: Rückflussverhinderer
- 43: Absperrventil
- 44: Regulierventile
- I: Fließrichtung
- 45: Absperrventil
- 46: Feinfilter
- 47: Regulierventil
- 48: Bypassumwälzpumpe
- 49: Strömungswächter
- 50: Bypassleitung
- 51: Elektrolyseanlage

## Patentansprüche

1. Verfahren zur Behandlung von Trinkwasser zur Bekämpfung von schädlichen Verunreinigungen, insbesondere Legionellen, mit chemischen und/oder mit elektrolytischen Mitteln zur Unschädlichmachung der Verunreinigungen und/oder zur Unterdrückung der Vermehrung der Verunreinigungen, wobei
die Behandlung in Abhängigkeit von einer aktuell gemessenen oder errechneten Verbrauchsmenge durchgeführt wird, und wobei
die Mittel in umgekehrter Abhängigkeit vom Wasserverbrauch angewendet werden, indem bei hohem Wasserverbrauch wenig oder kein Mittel, bei niedrigem oder keinem Wasserverbrauch dagegen relativ viel Mittel oder überhaupt nur Mittel angewendet wird.

2. Verfahren nach Anspruch 1,
**dadurch gekennzeichnet, dass**
das Frischwasser vor der oder den Verbrauchsstellen (9) zirkuliert und im Bereich der Zirkulation (10, 12) behandelt wird.

3. Verfahren nach einem der vorhergehenden Ansprüche,
**dadurch gekennzeichnet, dass**
Kaltwasser behandelt wird.

4. Verfahren nach einem der vorhergehenden Ansprüche,
**dadurch gekennzeichnet, dass**
Kaltwasser vor der oder den Verbrauchsstellen zirkuliert wird.

5. Verfahren nach einem der vorhergehenden Ansprüche,
**dadurch gekennzeichnet, dass**
das Kaltwasser in der Zirkulation gekühlt wird.

6. Verfahren nach einem der vorhergehenden Ansprüche,
**dadurch gekennzeichnet, dass**
das Verfahren vorbeugend und/oder bei Befall angewandt wird.

7. Verfahren nach einem der vorhergehenden Ansprüche,
**dadurch gekennzeichnet, dass**
die Behandlung je nach Hygienegrad und/oder Gefahrenpotential zumindest zeitweise so durchgeführt wird, dass eine minimale Konzentration mit Behandlungsmittel im behandelten Bereich nicht unterschritten wird, wobei die Konzentration an Behandlungsmittel zeitweise auch Null sein kann.

8. Verfahren nach einem der vorhergehenden Ansprüche,
**dadurch gekennzeichnet, dass**
die Behandlung so durchgeführt wird, dass eine maximale Konzentration an Behandlungsmittel und/oder deren Neben- und/oder Reaktionsprodukte im Wasser nicht überschritten wird, und/oder dass
die Behandlung vorzugsweise in den Nachtstunden erfolgt.

9. Verfahren nach einem der vorhergehenden Ansprüche,
**dadurch gekennzeichnet, dass**
die Behandlung so durchgeführt wird, dass eine vorgegebene Konzentration an Behandlungsmittel innerhalb einer bestimmten Zeit erreicht wird.

10. Verfahren nach einem der vorhergehenden Ansprüche,
**dadurch gekennzeichnet, dass**
die Behandlung temperaturabhängig durchgeführt wird.

11. Verfahren nach einem der vorhergehenden Ansprüche,
**dadurch gekennzeichnet, dass**
die Abwärme der Kaltwasserkühlung für die Erwärmung von Warmwasser verwendet wird.

12. Verfahren nach einem der vorhergehenden Ansprüche,
**dadurch gekennzeichnet, dass**
die Einbringung des Behandlungsmittels während der Behandlungsphasen kontinuierlich oder getaktet oder stoßweise erfolgt.

13. Verfahren nach einem der vorhergehenden Ansprüche,
**dadurch gekennzeichnet, dass**
eine Fernüberwachung der Behandlung durchgeführt wird.

14. Verfahren nach einem der vorhergehenden Ansprüche,
**dadurch gekennzeichnet, dass**
Verbrauchswerte an Trinkwasser und Behandlungsmittel aufgezeichnet werden.

15. Verfahren nach einem der vorhergehenden Ansprüche,
**dadurch gekennzeichnet, dass**
die Konzentrationen an Behandlungsmittel, seiner Neben- und Reaktionsprodukte aufgezeichnet werden.

16. Verfahren nach einem der vorhergehenden Ansprüche,
**dadurch gekennzeichnet, dass**
die aufgezeichneten Daten über Fernüberwachung abgefragt werden.

17. Verfahren nach einem der vorhergehenden Ansprüche,
**dadurch gekennzeichnet, dass**
Behandlungsmittel bei Erreichen eines unteren Grenzwertes der Konzentration an Behandlungsmittel und/oder seiner Neben- und/oder Reaktionsprodukte ins System gegeben wird.

18. Verfahren nach einem der vorhergehenden Ansprüche,
**dadurch gekennzeichnet, dass**
die Zugabe des Mittels bei Erreichen eines oberen Grenzwertes der Konzentration beendet wird.

19. Verfahren nach einem der vorhergehenden Ansprüche,
**dadurch gekennzeichnet, dass**
die Messung der Konzentration im eigentlichen Leitungsnetz einschließlich der Zirkulation erfolgt.

20. Verfahren nach einem der vorhergehenden Ansprüche,
**dadurch gekennzeichnet, dass**
die Grenzwerte tags und nachts unterschiedlich gewählt werden.

21. Verfahren nach einem der vorhergehenden Ansprüche,
**dadurch gekennzeichnet, dass**
die Mittel in Abhängigkeit von einem im Wasser gemessenen Wert der Konzentration an Behandlungsmittel und/oder seiner Neben- und/oder Reaktionsprodukte angewendet werden.

22. Vorrichtung zur Behandlung von Trinkwasser zur Bekämpfung von schädlichen Verunreinigungen, insbesondere Legionellen, mit chemischen und/oder elektrolytischen Mitteln zur Unschädlichmachung der Verunreinigungen und/oder zur Unterdrückung der Vermehrung der Verunreinigungen, wobei ein Wasserzähler (5, 20, 21) mit Messimpulsgeber, eine Mess- und Regeleinrichtung (29) und eine Dosiereinrichtung (13) vorgesehen sind, und wobei die Mess- und Regeleinrichtung (29) so eingerichtet ist, dass sie eine Eingabe von Behandlungsmittel in umgekehrter Abhängigkeit vom aktuell gemessenen oder errechneten Wasserverbrauch veranlasst, indem bei hohem Wasserverbrauch wenig oder kein Mittel, bei niedrigem oder keinem Wasserverbrauch dagegen relativ viel Mittel oder überhaupt nur Mittel eingegeben wird.

## Claims

1. A method for the treatment of drinking water for the combating of harmful contaminants, in particular legionella, having chemical means and/or having electrolytic means for rendering the contaminants harmless and/or for the suppression of the multiplication of the contaminants, wherein
the treatment is carried out in dependence on a currently measured or calculated consumption amount, and wherein
the means are used in inverse dependence on the water consumption in that few means or no means are used with a high water consumption and, in contrast, a relatively large amount of means or just means are used with a low water consumption or on no water consumption.

2. A method in accordance with claim 1, **characterised in that** fresh water is circulated before the consumption point or points (9) and is treated in the region of the circulation (10, 12).

3. A method in accordance with any one of the preceding claims, **characterised in that** cold water is treated.

4. A method in accordance with any one of the preceding claims, **characterised in that** cold water is circulated before the consumption point or points.

5. A method in accordance with any one of the preceding claims, **characterised in that** the cold water is cooled in the circulation.

6. A method in accordance with any one of the preceding claims, **characterised in that** the method is used prophylactically and/or in case of infestation.

7. A method in accordance with any one of the preceding claims, **characterised in that** the treatment is carried out at least at times in dependence on the degree of hygiene and/or the risk potential such that a minimal concentration of treatment means in the treated region is not fallen below , with the concentration of treatment means also being able to be zero at times.

8. A method in accordance with any one of the preceding claims, **characterised in that** the treatment is carried out such that a maximum concentration of treatment means and/or their side-products and/or reaction products in the water is not exceeded; and/or **in that** the treatment preferably takes place at night.

9. A method in accordance with any one of the preceding claims, **characterised in that** the treatment is carried out such that a preset concentration of treatment means is achieved within a specific time.

10. A method in accordance with any one of the preceding claims, **characterised in that** the treatment is carried out in dependence on the temperature.

11. A method in accordance with any one of the preceding claims, **characterised in that** the waste heat of the cold water cooling is used for the heating of hot water.

12. A method in accordance with any one of the preceding claims, **characterised in that** the introduction of the treatment means takes place continuously or in cycles or intermittently during the treatment phases.

13. A method in accordance with any one of the preceding claims, **characterised in that** a remote monitoring of the treatment is carried out.

14. A method in accordance with any one of the preceding claims, **characterised in that** consumption values of drinking water and treatment means are recorded.

15. A method in accordance with any one of the preceding claims, **characterised in that** the concentration of treatment means, of its side products and reaction products are recorded.

16. A method in accordance with any one of the preceding claims, **characterised in that** the recorded data are polled via remote monitoring.

17. A method in accordance with any one of the preceding claims, **characterised in that** treatment means are added into the system on the reaching of a lower threshold of the concentration of treatment means and/or its side products and/or reaction products.

18. A method in accordance with any one of the preceding claims, **characterised in that** the addition of the means is terminated on the reaching of an upper concentration threshold.

19. A method in accordance with any one of the preceding claims, **characterised in that** the measurement of the concentration takes place in the actual mains including the circulation.

20. A method in accordance with any one of the preceding claims, **characterised in that** the thresholds are selected to be different during the day and at night.

21. A method in accordance with any one of the preceding claims, **characterised in that** the means are applied in dependence on a value measured in the water of the concentration of treatment means and/or of its side products and/or reaction products.

22. An apparatus for the treatment of drinking water for the combating of harmful contaminants, in particular legionella, having chemical and/or electrolytic means for rendering the contaminants harmless and/or for the suppression of the multiplication of the contaminants, wherein a water meter (5, 20, 21) having a measurement encoder, a measurement and regulation device (29) and a metering unit (13) are provided, and wherein the measurement and regulation device (29) is configured such that it causes an input of treatment means in inverse dependence on the currently measured or calculated water consumption in that few means or no means are input with a high water consumption and, in contrast, a relatively large amount of means or just means are input with a low water consumption or on no water consumption.

## Revendications

1. Procédé de traitement d'eau potable pour la lutte contre des impuretés nocives, en particulier des légionelles, avec des produits chimiques et/ou électrolytiques pour neutraliser les impuretés et/ou pour réprimer la multiplication d'impuretés,
dans lequel le traitement est effectué en fonction d'une quantité de consommation actuellement mesurée ou calculée, et les produits sont appliqués en fonction inverse de la consommation d'eau, en n'utilisant que peu ou pas de produit en cas de forte consommation d'eau, en utilisant par contre relativement beaucoup de produit en cas de consommation d'eau faible ou nulle ou en utilisant seulement du produit.

2. Procédé selon la revendication 1,
**caractérisé en ce que**
l'eau fraîche circule en amont du ou des point(s) de consommation (9) et est traitée dans la zone de la circulation (10, 12).

3. Procédé selon l'une quelconque des revendications précédentes,
**caractérisé en ce que**
l'on traite de l'eau froide.

4. Procédé selon l'une quelconque des revendications précédentes,
**caractérisé en ce que**
l'on fait circuler de l'eau froide en amont du ou des points de consommation.

5. Procédé selon l'une quelconque des revendications précédentes,
**caractérisé en ce que**
l'on refroidit l'eau froide dans la circulation.

6. Procédé selon l'une quelconque des revendications précédentes,
**caractérisé en ce que**
l'on applique le procédé à titre préventif et/ou en cas d'infestation.

7. Procédé selon l'une quelconque des revendications précédentes,
**caractérisé en ce que**
l'on effectue le traitement selon le degré d'hygiène et/ou le potentiel de danger au moins temporairement, de telle sorte que l'on ne reste pas en dessous d'une concentration minimale en produits de traitement dans la zone traitée, la concentration de produits de traitement pouvant temporairement être aussi égale à zéro.

8. Procédé selon l'une quelconque des revendications précédentes,
**caractérisé en ce que**
l'on effectue le traitement de telle sorte que l'on ne dépasse pas une concentration maximale en produits de traitement et/ou leurs produits secondaires et/ou leurs produits de réaction dans l'eau, et/ou **en ce que** le traitement a lieu de préférence pendant la nuit.

9. Procédé selon l'une quelconque des revendications précédentes,
**caractérisé en ce que**
l'on effectue le traitement de telle sorte qu'une concentration prédéterminée de produits de traitement est atteinte pendant une période déterminée.

10. Procédé selon l'une quelconque des revendications précédentes,
**caractérisé en ce que**
l'on effectue le traitement en fonction de la température.

11. Procédé selon l'une quelconque des revendications précédentes,
**caractérisé en ce que**
l'on utilise la chaleur dissipée du refroidissement d'eau froide pour le réchauffement d'eau chaude.

12. Procédé selon l'une quelconque des revendications précédentes,
**caractérisé en ce que**
l'on effectue l'introduction du produit de traitement pendant les phases de traitement de façon continue ou cadencée ou par intermittence.

13. Procédé selon l'une quelconque des revendications précédentes,
**caractérisé en ce que**
l'on effectue une télésurveillance du traitement.

14. Procédé selon l'une quelconque des revendications précédentes,
**caractérisé en ce que**
l'on enregistre des valeurs de consommation en eau potable et en produit de traitement.

15. Procédé selon l'une quelconque des revendications précédentes,
**caractérisé en ce que**
l'on enregistre les concentrations en produit de traitement, en ses produits secondaires et/ou en ses produits de réaction.

16. Procédé selon l'une quelconque des revendications précédentes,
**caractérisé en ce que**
l'on consulte les données enregistrées par télésurveillance.

17. Procédé selon l'une quelconque des revendications précédentes,
**caractérisé en ce que**
l'on injecte des produits de traitement dans le système lorsqu'une valeur limite inférieure de concentration en produit de traitement ou en ses produits secondaires et/ou en ses produits de réaction est atteinte.

18. Procédé selon l'une quelconque des revendications précédentes,
**caractérisé en ce que**
l'on met fin à l'adjonction du produit lorsqu'une valeur limite supérieure de la concentration est atteinte.

19. Procédé selon l'une quelconque des revendications précédentes,
**caractérisé en ce que**
l'on effectue la mesure de la concentration dans le réseau de distribution proprement dit, y compris la circulation.

20. Procédé selon l'une quelconque des revendications précédentes,
**caractérisé en ce que**
l'on choisit différemment les valeurs limites le jour et la nuit.

21. Procédé selon l'une quelconque des revendications précédentes,
**caractérisé en ce que**
l'on applique les produits en fonction d'une valeur mesurée dans l'eau, de la concentration en produit de traitement et/ou en ses produits secondaires et/ou en ses produits de réaction.

22. Dispositif de traitement d'eau potable pour la lutte contre des impuretés nocives, en particulier des légionelles, avec des produits chimiques et/ou électrolytiques pour neutraliser les impuretés et/ou pour réprimer la multiplication d'impuretés, dans lequel sont prévus un compteur d'eau (5, 20, 21) avec capteur de mesure par impulsions, un dispositif de mesure et de régulation (29) et un dispositif de dosage (13), et dans lequel le dispositif de mesure et de régulation (29) est conçu de telle sorte qu'il met en oeuvre une entrée de produit de traitement en fonction inverse de la consommation d'eau actuellement mesurée ou calculée en n'introduisant que peu ou pas de produit en cas de forte consommation d'eau, en introduisant par contre relativement beaucoup de produit en cas de consommation d'eau faible ou nulle ou en introduisant seulement du produit.
